# EUROPEAN PATENT APPLICATION

(11) **EP 4 046 483 A1**
(43) Date of publication of application: **24.08.2022**
(21) Application number: 21305199.8
(22) Date of filing: 18.02.2021
(51) Int. Cl.: A01K 1/03, A01K 11/00, A01K 15/02, A01K 29/00, G06K 7/10, H01Q 17/00

(54) **RACK AND METHOD FOR ANALYZING THE BEHAVIOR AND PHYSICAL ACTIVITY OF ANIMALS HOUSED IN CAGES**

(71) Applicant: INSTITUT NATIONAL DE LA SANTE ET DE LA RECHERCHE MEDICALE - INSERM, 75013 Paris (FR); UNIVERSITE PAUL SABATIER TOULOUSE III, 31062 Toulouse Cedex 9 (FR)
(72) Inventor: Parini, Angelo, 31062 Toulouse Cedex 9 (FR); Santin, Yohan, 75013 Paris (FR)
(74) Representative: Lavoix

(57) **Abstract**

This rack is configured for analyzing the behavior and the physical activity of a population of animals (M1-M4) housed in cages (14) distributed in respective cells (8, 8ₖ), at least some of the cages being equipped with an exercise wheel (20). At least a first cell (8₂, 8₃) is provided with a proximity sensor (30) configured for detecting a tag (Ti) carried by an animal located in the exercise wheel (20) of a first cage installed within the first cell, this cage being devoid of a proximity sensor.

## Description

The present invention relates to a rack configured for analyzing the behavior and physical activity of a population of animals housed in cages. The present invention also relates to a method, which can be implemented with the rack of the invention, for analyzing the behavior of such a population of animals.

### BACKGROUND OF THE INVENTION

In the field of scientific research, it is common to study the behavior of a population of animals, such as mice. These animals are generally housed in cages. These cages are advantageously equipped with exercise wheels, so that the mice can practice a physical exercise. This practice of a physical exercise is representative of the physical and/or psychological state of each mouse. When a relatively large population, for instance including several dozen animals, must be studied, it is not possible to have a researcher checking the behavior of each animal. This is all the truer that some animals, such as mice, have their main activity period at night.

It is known to build a rack with rows and columns of cells, each cell being configured for accommodating a respective cage and equipped with a capacitive sensor located below the floor of a cage received within a cell, for detecting the movements of the mice housed in a given cage. This gives an overall picture of the movements of the mice within a cage, but does not allow identification of a single mouse among several mice housed in that cage, especially when this mouse practices physical exercise in an exercise wheel.

If one incorporates a proximity sensor on a cage, such a proximity sensor might be damaged during cleaning operations of the cage. Such cleaning operations must be carried out regularly for hygienic reasons. In particular, the cages may be cleaned in an autoclave, which is likely to destroy any proximity sensor mounted on the cage, unless said sensor is removed from the cage before cleaning and re-installed after cleaning, which is cumbersome and requires a qualified manpower.

On the other hand, it is known from WO-A-2014/118 727 to automatically detect the presence of cages in the shelves of a facility by using a RFID reader capable of detecting a RFID tag embedded in a filter of the cage. This approach allows detecting the presence or absence of a cage within a cell of the facility, but does not allow detecting a mouse within a cage, in particular with respect to an exercise wheel. In addition, the RFID tag is mounted on a filter of the cage, which is normally changed when the cage is cleaned. This filter must be handled specifically during a cage-cleaning operation. Here again, this is cumbersome and requires a qualified manpower.

On the other hand, the ColonyRack product marketed by PhenoSys GmbH allows automated tracking of a large population of mice, with cages interconnected by tubes that allow the passage of animals between the cages, which is detected by RFID transponder readers. This approach allows detecting interactions between mice, but does not allow following the physical activity of an individual mouse within a cage. Moreover, when cleaning of a cage is needed, proper disconnection from the tubes opening in this cage must be performed. This is time-consuming and also requires a qualified manpower.

According to an alternative approach, one could house a single mouse per cage and detect a rotation of the exercise wheel, which could be then logically connected to this single mouse. However, it is in practice not possible to deprive a mouse of social interactions over a long period of time, in particular over its usual lifetime as an adult, which is about eighteen months to two or three years. Indeed, depriving a mouse of social contacts would distort the experience and could have a negative influence on the physical and mental state of each mouse. Moreover, this would increase the volume needed to follow-up a population including a given number of animals and the price of the rack would raise drastically.

### SUMMARY OF THE PRESENT INVENTION

The present invention aims at solving these problems by providing an optimized rack which allows analyzing the behavior and the physical activity of a relatively large population of animals, in particular mice, in an automated and individualized matter, for a long period of time, typically from a few days up to several months, while keeping social contacts between the animals housed in the same cage.

With this respect, the present invention relates to a rack configured for analyzing the behavior and the physical activity of a population of animals housed in cages, this rack being equipped with a plurality of cages, distributed in respective cells, at least some of the cages being equipped with an exercise wheel, wherein at least a cell is provided with a proximity sensor configured for detecting a tag carried by an animal located in the exercise wheel of a first cage installed within the first cell, this cage being devoid of a proximity sensor.

Owing to the invention, the proximity sensor, which is stationary with respect to the structure of the rack, is efficient for detecting and identifying an animal practicing physical exercise in an exercise wheel. On the other hand, since the proximity sensor is provided in the cell, not on the cage, there is no risk of damaging this proximity sensor during a cleaning operation of the cage.

According to further advantageous aspects of the invention, the rack of the invention might incorporate one or several of the following features, taken in any technically compatible configuration:
- The proximity sensor is located between a volume for receiving the first cage in the first cell and a volume for receiving a second cage in a second adjacent cell.
- The rack includes several columns and several rows of cells, each cell being provided for accommodating a respective cage, whereas the proximity sensor is located between two cages installed in two adjacent cells, which belong to a same row of cells and to two adjacent columns of cells, or between two cages installed in two superposed cells, which belong to a same column of cells and to two superposed rows of cells.
- An electromagnetic shield is located near the proximity sensor and prevents the propagation of an electromagnetic field generated by the proximity sensor between the proximity sensor and the second cage installed in the second adjacent cell.
- The rack includes support members located in either side of each cell, for supporting a cage installed within this cell, and wherein each proximity sensor is located above or below at least one support member.
- The proximity sensor is a RFID sensor and includes at least one antenna configured for generating an electromagnetic field within the first cage installed within the first cell.
- The antenna is configured and energized for generating the electromagnetic field fully covering the volume of the exercise wheel of the first cage.
- The antenna is configured and energized for generating the electromagnetic field substantially limited to the volume of the exercise wheel of the first cage.
- The antenna generates a horizontally oriented electromagnetic field.
- The antenna generates a vertically oriented electromagnetic field.
- The rack includes a rotation sensor for measuring a speed of rotation, an angular acceleration and/or an angular position of the exercise wheel of the first cage.
- All cells are provided with a proximity sensor, all cages are equipped with an exercise wheel and all proximity sensors are located on the same lateral side of the cells.
- The rack includes at least one data collector for collecting output signals of several proximity sensors, preferably one data collector for all proximity sensors of a column or a raw of cells, and for transferring it to a central control unit.

According to a second aspect, the invention relates to a method for analyzing the behavior and the physical activity of a population of animals housed in cages, with the rack mentioned here above, wherein this method includes at least the following steps:
a) marking each animal with an individual tag bound to the animal;
b) determining that an animal exercises when the proximity sensor detects a tag in the exercise wheel of the first cage;
c) identifying the animal in the exercise wheel by its individual tag and
d) collecting the data regarding the respective animals in the population over a given period of time.

Advantageously, when the rack includes a rotation sensor, for each animal determined as exercising in the exercise wheel in step b) and over the time interval during which the animal exercises, the intensity of the physical exercise is determined based on the output signal of the rotation sensor and associated to the animal identified in step c).

### BRIEF DESCRIPTION OF THE DRAWINGS

The description will be better understood based on the following description, given as a non-limiting example and made in reference to the following figures:
- [Fig. 1] figure 1 is a front perspective view of a rack according to the invention, viewed along a first direction;
- [Fig. 2] figure 2 is a back partial perspective view, under a larger scale, of the rack of figure 1 viewed along a second direction at the level of its bottom left corner on figure 1;
- [Fig. 3] figure 3 is a perspective view of detail III on figure 1, where two cages have been removed and where a part of a cover has been pulled out to show some parts of a proximity sensor;
- [Fig. 4] figure 4 is a perspective view of detail III on figure 1, viewed from another angle;
- [Fig. 5] is a partial cut view along plane V on figure 3; and
- [Fig. 6] is a perspective view similar to figure 3, for a rack according to a second embodiment of the invention.

### DETAILED DESCRIPTION OF SOME EMBODIMENTS

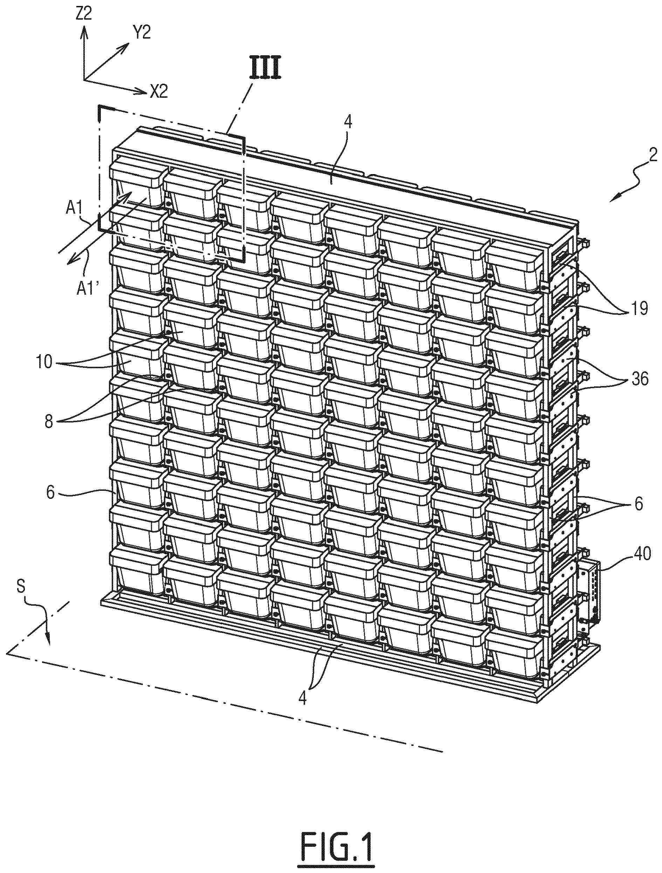

The rack 2 represented on figures 1 to 5 includes a series of cross-beams 4, which extend horizontally and a series of posts 6 that extend vertically. The crossbeams 4 and the post 6 define ten rows and eight columns of cells 8, each cell 8 being configured for receiving a cage 10. The uppermost crossbeam 4 is shaped as a plate and defines a roof for the rack 2.

X2 denotes a longitudinal axis of the rack 2, which is horizontal when the rack 2 is installed on a flat horizontal surface S. The different columns of cells 8 are juxtaposed along this longitudinal axis X2. Y2 denotes a transversal axis of the rack 2, which is perpendicular to axis X2 and horizontal, like axis X2. Z2 denotes a vertical or height axis of the rack 2, the different rows of cells 8 extend parallel to axis X2 and are juxtaposed along this vertical axis Z2. The different columns of cells 8 extend parallel to axis Z2. Axes X2, Y2, and Z2 together define an orthogonal frame associated to the rack 2.

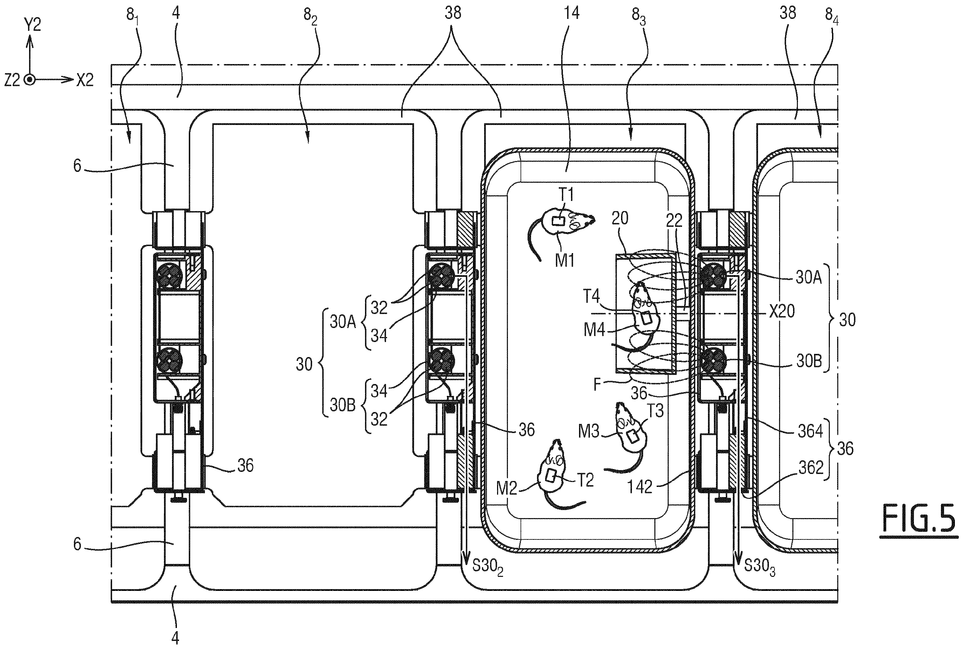

Each cage 10 has a size large enough for accommodating several animals, for instance four mice M1 to M4, as shown on figure 5.

In the example of the figures, the rack 2 allows following the evolution of a population of four mice times eight columns times ten rows, which equals 320 mice. This is sufficient for obtaining statistic data on a representative population in many experiments.

The number of rows and columns of the rack 2 can be adjusted to the needs, in particular to the size of the population to be studied.

A cage can be introduced with the corresponding cell 8 via a translational movement parallel to axis Y2, as represented by arrow A1 on figure 1. A cage can be extracted from the corresponding cell 8 via a translational movement parallel to axis Y2, in a direction opposite to the introduction movement, as represented by arrow A1' on figure 1.

Each cage 10 includes a main compartment 12 and a cover 14 for closing the main compartment. Each part 12 or 14 is preferably made of a transparent plastic material, such as polycarbonate or polysulfone, which can be easily cleaned, for instance in an autoclave.

Each main compartment 12 has two lateral extensions 122 on each lateral side, configured for sliding on the upper surfaces 182 of two support members 18 located on either side of a cell 8 during a translational introduction or extraction movement of the cage into or from a cell 8 and for resting on these surfaces when the cage is received within this cell.

In a variant, a single lateral extension122 can be provided on each lateral side of a main compartment 12. In another variant, three or more extensions can be provided on each side of a main compartment.

Each support member 18 is fixed on two posts 6 and works as a spacer between these two posts, which allows keeping a distance between these two posts along axis Y2. In practice, a pair of support members 18 is fixed on either side of two post 6 adjacent along axis Y2. Each support member of a pair of support members belongs to a respective cell 8 among two cells adjacent in a direction parallel to axis X2.

Along a direction parallel to axis X2, a cell is defined between its two support members 18 fixed on two pairs of posts 6, these two pairs of posts being adjacent along axis X2. With the orientation of figures 1 and 3 to 5, the support members 18 of a cell can be identified as a left support member and a right support member, respectively located on the left and on the right of a cell 8.

In addition, some spacers 19 are located on the external sides of the outer posts 6 defining the first and last cell 8 of each row of cells. These spacers 19 have a shape similar to the shape of the support members 18, but do not define upper surfaces similar to upper surfaces 182, since no cage is supposed to lie on these spacers.

Each cage 10 is equipped with an exercise wheel 20, which is mounted rotatable on a lateral wall 142 of its main compartment 12 and supported by a bearing 22, which defines the rotation axis X20 of the wheel 20 with respect to the rest of the cage 10. When a cage 10 is housed in a cell 8 of the rack 2, the rotation axis X20 of its exercise wheel 20 is parallel to axis X2.

Each cage is configured to be installed in a cell 8 with its exercise wheel located on the right of the cell, that is close to the right support member 18 of this cell.

An encoder 24 is integrated in the right support member 18 of each cell 8. This encoder is configured for detecting the angular position of the wheel 20 of a cage received this cell, around its rotation axis X20 and to deliver a signal S24 representative of this angular position to an electronic control unit or ECU 26, which, in this example, is a part of a personal computer 27.

As a non-limiting example, the exercise wheel can be equipped with a permanent magnet and the encoder can include one or several Hall effect sensors capable of detecting a variable magnetic field generated by the permanent magnet. Other techniques may be used for designing the encoder 24.

Based on the output signal S24 from the encoder 24, the ECU 26 is capable of computing the speed of rotation ω20 of the exercise wheel 20 around axis X20, and/or the angular acceleration A20 of the exercise wheel, and/or the angular position P20 of the exercise wheel around this axis X20.

Thus, the encoder 24 and the ECU 26 allow detecting when one of the four mice M1 to M4 present in the cage visible on figure 5 practices exercise within the exercise wheel and also the intensity of this practice, on the basis of parameters ω20 and/or A20. In addition, the detection of the time of entry of a mouse in the wheel 20 and the time of exit of the same mouse provides the duration of exercise.

In order to identify which mouse Mi is actually practicing exercise within the exercise wheel 20 at a given time, each mouse is carries a tag Ti, with i an integer between 1 and N, where N is the number of mice housed within the cage 10. N equals 4 in the example of the figures. In practice, a tag may be inserted under the skin of each mouse Mi, on its back.

Advantageously, each tag Ti is based on the Radio Frequency IDentification (RFID) technology, and includes an antenna associated with an electronic chip. This allows each tag to receive and to respond to radio requests emitted by a transceiver.

The rack 2 includes one proximity sensor 30 per cell 8, configured for detecting a tag Ti carried by one mouse located in its zone of coverage, this zone of coverage being set to correspond to the exercise wheel 20 of a cage 8 received within this cell 8. A proximity sensor 30 belongs to the cell 8 where it detects tags Ti.

In this example, when one uses RFID tags Ti, the proximity sensor 30 is a RFID transceiver compatible with the respective tags Ti.

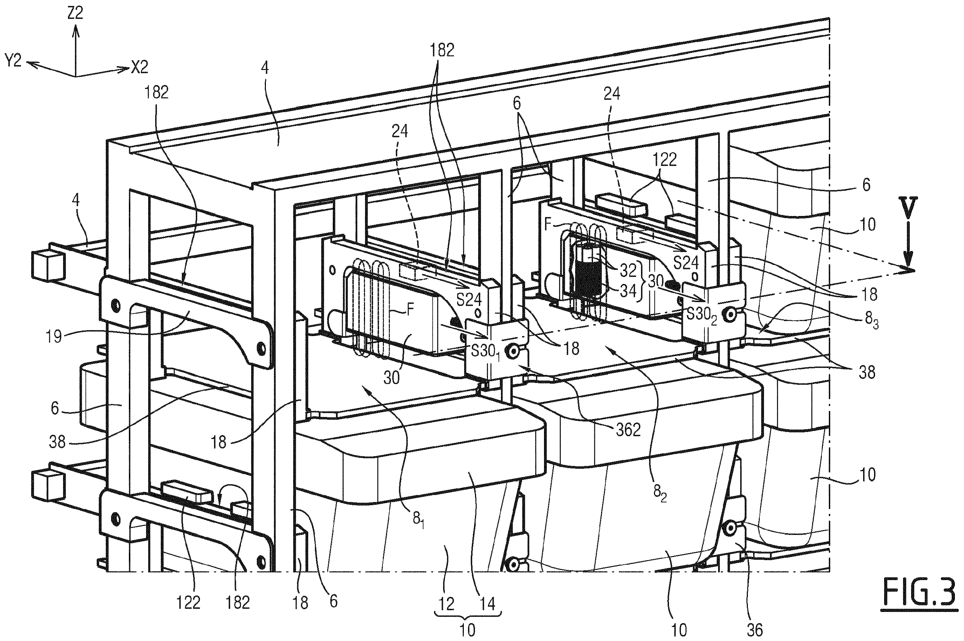

Each proximity sensor 30 includes two transceivers 30A and 30B. Each transceiver comprises an antenna 32 and an excitation coil 34 and is configured for generating an electromagnetic field F activating any RFID tag located in its zone of coverage. In a non-represented alternative embodiment of the invention, the proximity sensor 30 may incorporate a single transceiver, with one antenna 32 and two coils 34. Each transceiver is also configured for detecting a response of such a RFID tag. Each proximity sensor 30 also includes a cover 36 which protects parts 32 and 34 from their environment, in particular from dust and from potential shocks due to moving cages 10, during the introduction/extraction movements in the direction of arrows A1 and A1'. On figure 3, the cover 36 of the proximity sensor 30 of the second cell 8₂ is partly taken out, on order to show parts 32 and 34.

Upon excitation of the antenna 32 by the coil 34, the electromagnetic field F is generated in the vicinity of the proximity sensor 30, in particular in the volume occupied by the exercise wheel 20 within the cage 10.

Each proximity sensor outputs a signal S30, to be delivered to the ECU 26 and which includes information on any tag Ti detected in the exercise wheel 20 of a cage received in the adjacent cell 8.

Thanks to the proximity sensor 30, it is thus possible to detect when a mouse Mi practices exercise in the exercise wheel 20 and to identify this mouse Mi by its tag Ti, this information being forwarded to the ECU 26 as a part of the output signal S30 of the proximity sensor 30.

This allows following up the individual behavior and the physical activity of each mouse Mi of the population of mice housed in the rack 2.

In practice, the signals S24 and S30 are individualized per cell. If k designates the order number of a cell 8ₖ among the cells 8 of the rack 2, the signals corresponding to this cell 8ₖ can be identified respectively as S24ₖ and S30ₖ. In the example of the figures, k is between 1 and 320.

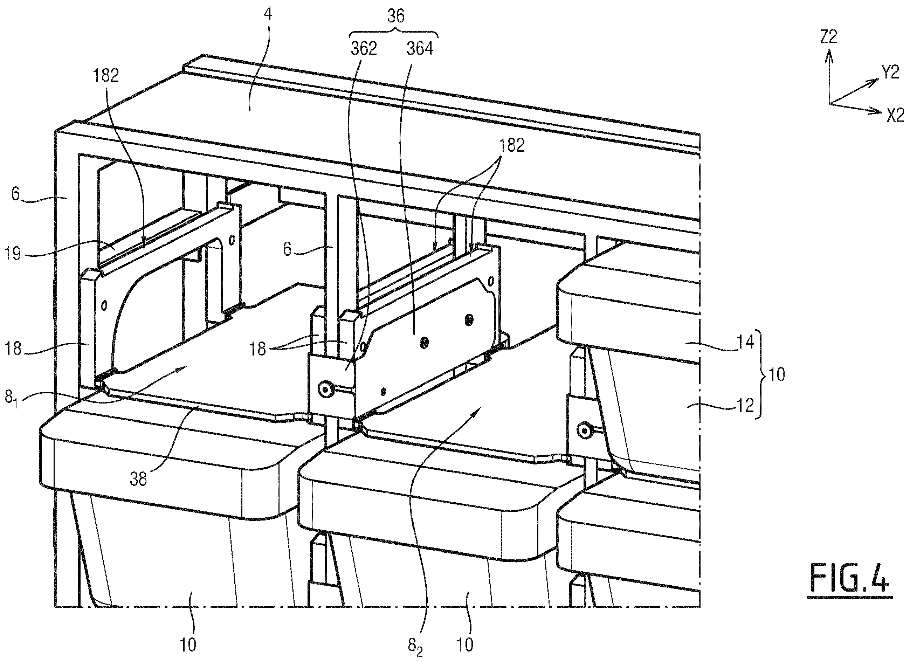

Figures 3 and 4 show two empty cells 8₁ and 8₂ which correspond to the first two cells of the upper row of cells 8, when starting from the left of figure 1. Figures 3 and 4 also show a first cell 8₃ of the same upper row, adjacent to the cell 8₂ and where a cage 10 is received. Figure 5 fully shows cells 8₂ and 8₃ and partly shows cell 8₁ and a cell 8₄ adjacent to cell 8₃ and located on the other side of this cell with respect to cell 8₂.

But for the one associated to the last cell on the right of a row, each proximity sensor 30 of a cell is located between, on one side, the volume of reception of a cage within this cell and, on the other side, the volume of reception of a cage in an adjacent cell. For instance, as shown on figure 5, the proximity sensor 30 of cell 8₂ is located between the empty volume of this cell and the volume of cell 8₃ occupied by a cage 10, whereas the proximity sensor 30 of cell 8₃ is located between volume of this cell occupied by a cage 10 and the volume of cell 8₄ occupied by another cage 10.

But for the one associated to the last cell on the right of a row, each proximity sensor 30 is located between two cages 10 installed in two adjacent cells 8 which belong to a same row of cells and to two adjacent columns of cells.

In order to avoid perturbation of the detection of a mouse Mi in the exercise wheel 20 of a cage 10 located in a given cell, say cell 8₃ on figure 5, it is essential not to detect a mouse present in a neighboring cage, say cell 8₄ on figure 5. This issue is handled by providing a shield 36 next to the proximity sensor 30 located in cell 8₃, in order to prevent the propagation of the electromagnetic field F generated by the antennas 32 towards the cage 10 received in this second cell 8₄.

In practice, a shield 36 is associated to each proximity sensor 30 and located next to this proximity sensor, on its side opposite to the center of the cell 8 where this proximity sensor is supposed to detect a mouse Mi.

The shields 36 can be made of aluminum, steel or any other suitable material.

Each shield 36 includes a tab 362 fixed on a front face of a post 6 and a main portion 364 which extends from the tab 362 along the left support member 182 of the adjacent cell, cell 8₄ in the example of figure 5.

For the sake of industrialization, all shields 36 are identical.

The geometry of a shield allows placing a proximity sensor 30 below a pair of two support members 182 mounted on either side of two post 6 adjacent along axis Y2. In other words, a proximity sensor 30 is within a space defined between two adjacent cells 8 of a row of cells, or at one lateral end of the rack 2, on the right end of a row. Thus, the proximity sensors 30 do not increase the overall length of the rack 2.

If the proximity sensor is thin enough, it can be located above or below one support member 18 of a pair of support members.

The position of each proximity sensor 30 with respect to a cage 10 received within a cell 8 where this proximity sensor 30 is supposed to detect a mouse Mᵢ within the exercise wheel 20 is optimized in order to efficiently cover the volume normally occupied by the exercise wheel 20 within the cell 8. The position of the proximity sensor 30 along axis X2, Y2 and Z2 is determined in view of the position of axis X₂₀ and of the distance, along axis X₂₀, between the wall of the main compartment 12 where the bearing 22 is anchored and the most remote part of the exercise wheel 20 with respect to this wall.

In particular, a distance between the exercise wheel 20 of a cage 10 received within a cell 8 and the proximity sensor 30 of this cell, measured parallel to axis X2, is less than 50 mm, preferably less than 30 mm. In addition, a horizontal distance between axis X20 of a cage 10 received within a cell 8 and the geometrical center of the proximity sensor of this cell, measured parallel to axis Y2, is less than 80 mm, preferably less than 50 mm. Finally, a vertical distance between axis the X20 of a cage 10 received within a cell 8 and the geometrical center of the proximity sensor of this cell, measured parallel to axis Z2, is less than 30 mm, preferably less than 15 mm..

The electromagnetic properties of the antennas 32, in particular their inductance, and the properties of the excitation current of the coil 34 of a proximity sensor 30, in particular its frequency, are chosen in order for the magnetic field F to fully cover the exercise wheel 20 of a cage 10 located in the cell 8 associated with a given proximity sensor 30 These properties are also chosen so that the magnetic field is substantially limited to the volume of the exercise wheel 20, in order to avoid parasitic mouse detection, of a mouse outside the exercise wheel.

Each proximity sensor 30 can be located below a support member 18, as shown on the figures, or alternatively, above such a support member, without preventing proper cooperation between the at least two extensions 122 of the main compartment 12 and the two support members 18 of the cell 8 where this main compartment is inserted.

According to an optional aspect of the invention, a shelf 38 is provided in each cell 8 and located under a cage 10 received within such a cell. In other words, a shelf 38 separates two cells 8 located one above the other within a column of cells 8. Each shelf 38 can be equipped with a capacity sensor for detecting in which zone of a cage is/are positioned the mouse/mice housed within a cage. Such a capacity sensor is not capable of identifying or differentiating the mice housed within a given cage.

The bottom of a cage 10 received within a cell 8 does not rest on the shelf 38 of this cell since the cage is supported by the two support members 18 of this cell.

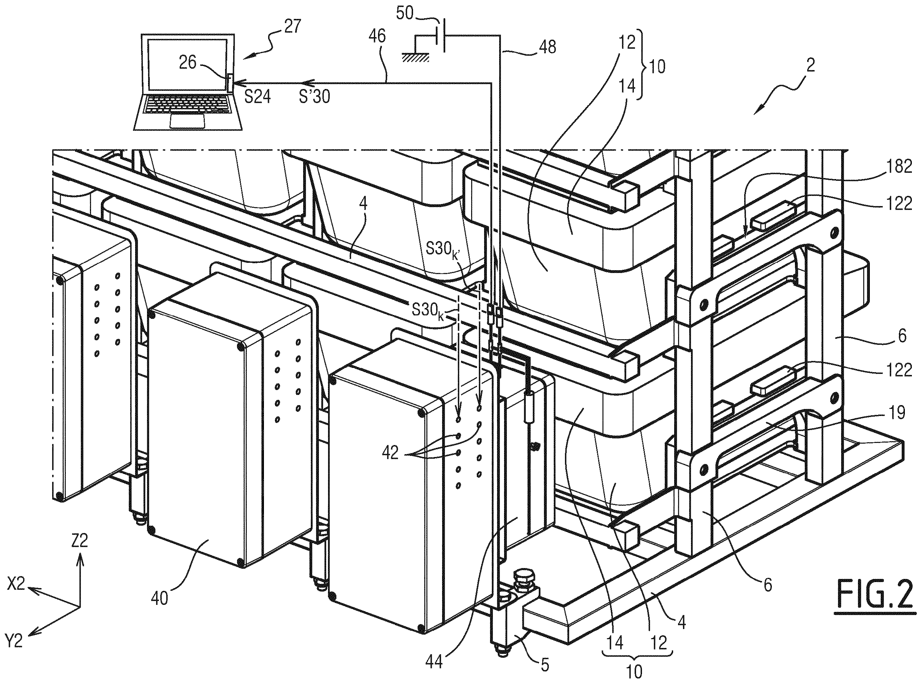

The rack 2 includes eight RFID signal concentration boxes 40, each box 40 being configured for receiving the output signals S30 of the ten proximity sensors 30 of one column. Each box 40 is provided with ten entry ports 42 for the respective signals S30. Only three concentration boxes 40 are visible on figure 2 and one is visible on figure 1. In practice, the concentration boxes 40 are distributed along the length of the rack 2 on the backside of the rack, in a lower part of the rack 2.

For each cell 8ₖ, with k an integer between 1 and the number of cells in the rack 2, which equals 80 in the example of the figures, the output signal S30ₖ of this cell is identified by an indicia corresponding to the order number k of this cell. This allows the respective output signals S30ₖ or S30ₖ, being acknowledged as corresponding to the respective cages k or k' when entering the entry ports 42, as shown on figure 2. Each concentration box generates a combined signal on the basis of the ten individual output signals S30ₖ that it receives from the ten proximity sensors 30 of its associated column.

The rack 2 also includes a converter box 44 for converting the eight combined output signals coming out of the eight concentration boxes 40 into a common signal S'30 transmitted to the ECU 26 according to a predetermined communication protocol suitable for transferring information on a RS-485 telecommunication bus with an Ethernet interface via the personal computer 27. Transmission between the converter box 44 and the ECU 26 occurs along a RS-485 data bus 46, which can be of any known type, wired or wireless.

In the example of the figures, the signal S'30 can include data relating to the 320 mice.

The boxes 40 and 44 can be used also for collecting the output signals S₂₄ of the encoders 24 and for forwarding them to the ECU 26, via the same data bus 46. Alternatively, the output signals of the encoders 24 follow a separate communication path.

The output signals S24ₖ of the respective encoders 24 can also be individualized with an indicia corresponding to the order number k of the cell 8k to which they belong.

If a concentration box 40 breaks down, the other concentration boxes 40 and the converter box 44 continue working normally, transferring information to the ECU 26 via the RS-485 data bus 46. Then only the information relating to the column associated to the broken concentration box 40 is missing.

The converter box 44 is supplied with electric current via a supply line 48 connected to a voltage source 50 represented on figure 2 only, for the sake of clarity.

The proximity sensors 30 are fixed within the structure of the rack 2, so that they remain in position within the rack 2, even when a cage 10 is taken out of the corresponding cell 8, in particular during a cleaning operation of a cage 10.

Each cage 10 is devoid of any proximity sensor or and of any tag detectable by a proximity sensor, so that there is no risk of damaging such a proximity sensor or such a tag during a cleaning operation of a cage, even if such a cleaning operation is performed within an autoclave.

In addition, since the identification of a mouse practicing exercise within the exercise wheel 20 of a cage 10 does not depend on an electronic component mounted on the cage, this detection can be performed even if a mouse is moved from one cage to another, for instance depending on the aging of the population of mice.

The invention allows identifying one mouse within a group of several mice, four mice in the example of the figures, which allows conducting an experiment with several mice housed within a cage. This is more favorable for the psychological and physical condition of the mice than if each mouse were individually housed within a cage. This approach also allows supervising a larger population of mice.

Thanks to the invention, following up of a population of mice can be automated, in particular since the proximity sensors 30, the boxes 40 and 44 and the ECU 26 work in an autonomous way. This allows collecting the data regarding the exercise practiced by the individuals in this population over a given period of time, for instance several months, e.g. 18 months, which corresponds to the usual adult life-time of a mouse. This point is particularly important as a growing number of translational studies concern the long-term follow up of large animal cohorts. Shorter periods of times, between a few days and several weeks, are also possible.

It is possible to determine the time interval when a mouse Mi practices exercise in an exercise wheel, this time interval being the one during which the associated proximity sensor 30 detects its tag Ti.

When combining the data received from an encoder 24 and from a proximity sensor 30 of a given cell 8ₖ, it is possible to determine the intensity of the physical exercise practiced by the mouse Mi identified in the signal S30ₖ, over the time interval, on the basis of the parameters ω20 and/or A20 included in the corresponding signal S24ₖ.

In the example of the figures, the exercise wheels 20 of the cages 10 are located on their right when they are received in the cells 8 and when the rack is seen from its front side. Alternatively, the exercise wheels can be located on the left of the cages. Preferably, the exercise wheels are of all cages are located on the same side, right or left, in order to allow an even distribution of the proximity sensors 30 within the rack 2 and to avoid disturbing the detection operated by two adjacent proximity sensors.

In the embodiment of figures 1 to 5, each antenna 32 is made of four bars whose main direction extends parallel to axis Z2. The magnetic field F generated by this antenna is vertically oriented, as shown on figures 3 and 5 by its magnetic field lines. Alternatively, one can use an antenna made of a single bar.

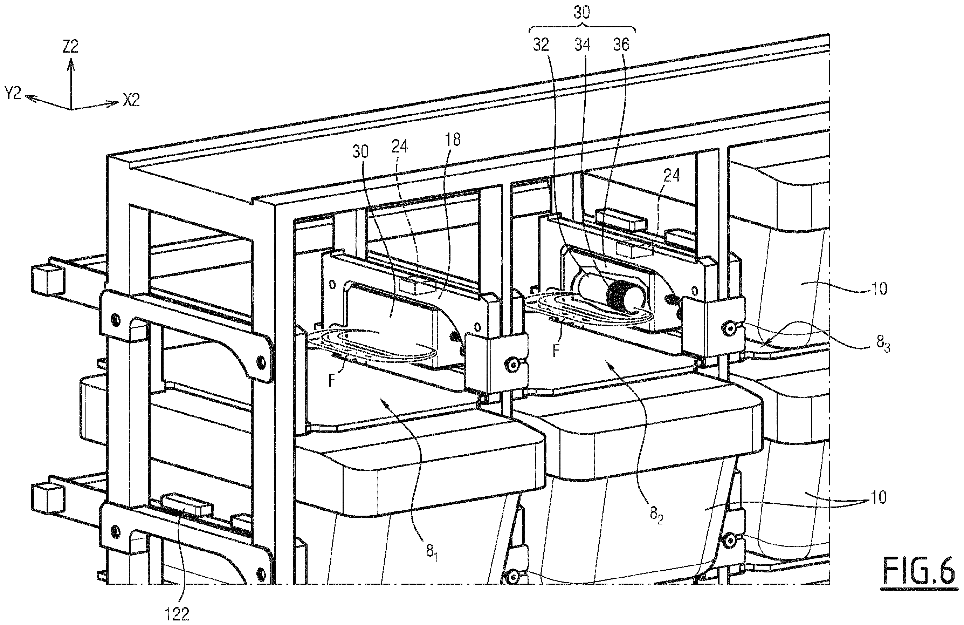

As shown on figure 6, and in a second embodiment of the invention, one can use a proximity sensor 30 with a single transceiver including an antenna 32 having its main direction parallel to the horizontal transverse axis Y2, which generates a horizontally oriented electromagnetic field F, as shown by its magnetic field lines. In the example of figure 6, the antenna is made of a single bar. In a variant, it can be made of several bars.

Two transceivers with horizontally oriented antennas can also be used in a non-represented variant.

According to a non-represented alternative embodiment of the invention, if the exercise wheel 20 of a cage 10 is mounted on the back wall of its compartment 12 which is perpendicular to the direction of arrows A1 and A1', then the proximity sensor can be located on the back side of the corresponding cell 8 and its antenna can have its length parallel to axis X2.

According to another non-represented alternative embodiment of the invention, a proximity sensor 30 can be located above or below the exercise wheel 20 of a cage 10 received in a cell 8. In such a case, the proximity sensor is located between two cages 10 installed in two superposed cells which belong to a same column of cells and to two superposed rows of cells

The number of transceivers in a proximity sensor 30 is not limited to two. It can be equal to one or larger than or equal to three, provided that there is enough space to accommodate them between two adjacent cells 8 of the rack 2.

Irrespective of the embodiment, an antenna 32 is made of a ferromagnetic material, such as ferrite.

The invention is described here above in case the animals followed-up during an experiment are mice. Alternatively, other animals can be followed-up, such as rats, guinea pigs, hamsters, rabbits, etc.

The invention is described here above and represented on the figures in case each cell 8 is provided with a proximity sensor 30 and each cage 10 is equipped with an exercise wheel 20. This is important for the consistency of the observations on the whole population. However, depending on the population of animals to be followed up, it is possible that one or some cages only is/are equipped with an exercise wheel and that one or some cells only is/are provided with a proximity sensor.

In a non-represented variant of the invention, each concentration box 40 received the output signals S30ₖ of proximity sensors of a given row of cells 8ₖ.

The number of rows and columns of cells 8 in the rack 2 may be varied according to the needs, in particular according to the size of the population to be followed-up.

The embodiments and variants considered here above may be combined in order to generate new embodiments of the invention defined in the attached set of claims.

## Claims

1. A rack (2) configured for analyzing the behavior and the physical activity of a population of animals (M1-M4) housed in cages (10) distributed in respective cells (8, 8ₖ), at least some of the cages being equipped with an exercise wheel (20), wherein at least a first cell (8₂, 8₃) is provided with a proximity sensor (30) configured for detecting a tag (Ti) carried by an animal located in the exercise wheel (20) of a first cage installed within the first cell, this cage being devoid of a proximity sensor.

2. The rack of claim 1 wherein the proximity sensor (30) is located between a volume for receiving the first cage (10) in the first cell (8₂,8₃) and a volume for receiving a second cage in a second adjacent cell (8₃,8₄).

3. The rack of claim 2 wherein the rack (2) includes several columns and several rows of cells (8, 8ₖ), each cell being provided for accommodating a respective cage (10), and wherein the proximity sensor (30) is located between two cages installed in two adjacent cells, which belong to a same row of cells and to two adjacent columns of cells, or between two cages installed in two superposed cells, which belong to a same column of cells and to two superposed rows of cells.

4. The rack of one of claims 2 and 3, wherein an electromagnetic shield (36) is located near the proximity sensor (30) and prevents the propagation of an electromagnetic field (F) generated by the proximity sensor between the proximity sensor and the second cage (10) installed in the second adjacent cell (8₃,8₄).

5. The rack of claim 4, wherein it includes support members (18) located in either side of each cell (8), for supporting a cage (10) installed within this cell, and wherein each proximity sensor (30) is located above or below at least one support member.

6. The rack of any preceding claim, wherein the proximity sensor (30) is a RFID sensor and includes at least one antenna (32) configured for generating an electromagnetic field (F) within the first cage (10) installed within the first cell (8₂,8₃).

7. The rack of claim 6 wherein, the antenna (32) is configured and energized for generating the electromagnetic (F) field fully covering the volume of the exercise wheel (20) of the first cage (8₂,8₃).

8. The rack of one of claims 6 and 7, wherein the antenna (32) is configured and energized for generating the electromagnetic field (F) substantially limited to the volume of the exercise wheel (20) of the first cage.

9. The rack of one of claims 6 to 8, wherein the antenna (22) generates a horizontally oriented electromagnetic field (F).

10. The rack of one of claims 6 to 8, wherein the antenna (32) generates a vertically oriented electromagnetic field (F).

11. The rack of any preceding claim, wherein it includes a rotation sensor (24) for measuring a speed of rotation (ω20), an angular acceleration (A20) and/or an angular position (P20) of the exercise wheel (20) of the first cage (10).

12. The rack of any preceding claim, wherein all cells (8) are provided with a proximity sensor (30), all cages (10) are equipped with an exercise wheel (20) and all proximity sensors are located on the same lateral side of the cells.

13. The rack of any preceding claim, wherein it includes at least one data collector (40) for collecting output signals (S30ₖ) of several proximity sensors (30), preferably one data collector for all proximity sensors of a column or a raw of cells (8, 8ₖ), and for transferring it to a central control unit (26).

14. A method for analyzing the behavior and the physical activity of a population of animals housed in cages (10), with the rack (2) of any one of the preceding claims, wherein this method includes at least the following steps :
a) marking each animal (Mi) with an individual tag (Ti) born by the animal;
b) determining that an animal exercises when the proximity sensor (30) detects a tag (Ti) in the exercise wheel (20) of the first cage (10);
c) identifying the animal in the exercise wheel by its individual tag; and
d) collecting (S'30) the data regarding the respective animals of the population over a given period of time.

15. The method of claim 14, wherein the rack is according to claim 11 and wherein, for each animal (Mi) determined as exercising in the exercise wheel (20) in step b) and over the time interval during which the animal exercises, the intensity of the physical exercise is determined based on an output signal (S24) of the rotation sensor (24) and associated to the animal identified in step c).
